# EUROPEAN PATENT APPLICATION

(11) **EP 1 443 490 A2**
(43) Date of publication of application: **04.08.2004**
(21) Application number: 03027793.3
(22) Date of filing: 03.12.2003
(51) Int. Cl.: G09G 5/00

(54) **Touchscreen display device**

(30) Priority: 08.01.2003 JP 2003002112
(71) Applicant: Pioneer Corporation, Meguro-ku, Tokyo (JP)
(72) Inventor: Fujita, Hiroaki, Pioneer Corporation Kawagoe Works, Kawagoe-shi Saitama (JP); Ishizu, Kazunori, Pioneer Corporation Kawagoe Wks., Kawagoe-shi Saitama (JP)
(74) Representative: Manitz, Finsterwald & Partner GbR

(57) **Abstract**

An improved touchscreen display device is provided. When displaying an image deriving from an image source (e.g., a DVD) and an operation button image in superposition, the image of the image source should not be obstructed by the operation button image. To this end, the image of the image source may be reduced in size, and the reduced image is combined with the operation button image. The image of the image source may be reduced in a horizontal and/or vertical direction by a screen compression technique. Alternatively, the image of the image source may be reduced by changing a display mode (e.g., from a wide mode to a normal mode).

## Description

### BACKGROUND OF THE INVENTION

### 1. Field of the Invention

The present invention relates to a touchscreen-type display device and the like.

### 2. Description of the Related Art

In recent years there has been widespread use of electronic equipment employing touchscreens. The touchscreens display a pattern for operation input on an image display screen and respond to some manner of access to the display pattern to receive the operation input. Touchscreens are becoming indispensable for car navigation equipment and for automotive audio and video equipment because mounting space for such equipment is limited.

One typical construction of the touchscreens is as follows. A touch sensor surface including a transparent resistive film(s) and electrode film(s) is formed on top of a screen of a display unit such as an LCD (liquid crystal display), organic EL (electroluminescence) display or other display. The touch sensor surface includes various operation buttons and/or other inputs so that a user can see the operation buttons on the display surface. When the user (more specifically, the user's finger) presses a certain operation button from among the operation buttons displayed on the display surface, the electrical resistance of the touch sensor surface at the pressed area changes due to the pressure applied by the user's finger. When a touchscreen controller detects the area in which the resistance has changed in the touchscreen surface, the controller determines which of the operation buttons has been pressed (or touched), based on the positional relationship between the detected area and the display area of the operation button displayed.

Another typical construction of the touchscreens is as follows. An optical sensor emits light slightly above a display surface of a display unit (e.g., LCD and organic EL display) parallel to the display surface. A controller of the touchscreen detects an area in which light is blocked when a user operates an operation button displayed on the display surface. The controller then determines which of the operation buttons has been operated. This touchscreen differs from the above described touchscreen which depends on the change in the electrical resistance in that the user can input operations without directly touching the display surface because blockage/interruption of the light passing over the display surface is sensed.

It should be noted that the principle and construction of the touchscreen is not limited to the above two examples, and various other principles and constructions exist; however, such principles and constructions are not directly related to the present invention, and so description of such other types is omitted.

Functions inherent in a display panel include display of, for example, images from television broadcast receivers, and images from CD-ROMs, DVDs and other recording media. In other words, the display panel shows the main image (e.g., car navigation map) and the touchscreen image (e.g., instruction entry image).

Japanese Patent Kokai (Laid-open Publication) No. 2002-328031 discloses a method for displaying a map image for car navigation, together with a touchscreen image for operation buttons. In Japanese Patent Kokai No. 2002-328031, a map image (main image) is displayed in the screen, and the touch button image (touchscreen image) is superimposed on the map image. If an image source is a DVD, a DVD menu or a map image is derived from a DVD and displayed on the screen. The touchscreen image is superimposed on, for example, the DVD menu screen by means of an "overlay" technique or an "on screen display (OSD)" technique.

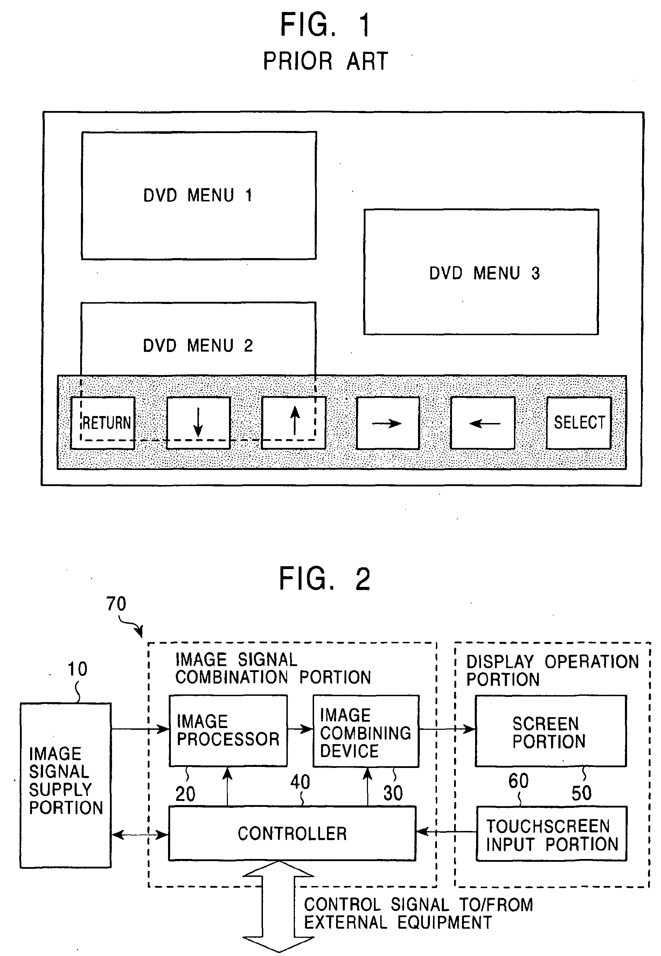

If the display panel shows the operation button image together with the map image and/or DVD menu image, the operation buttons sometimes overlap the map and/or DVD menu so that the map and/or DVD menu becomes partly or entirely invisible. Fig. 1 of the accompanying drawings shows that one of the DVD menus is partly hidden by the operation button image. In such case, the user must operate the operation button(s) or other buttons to drag and move the operation button display area, or must switch an appearance area mode for the operation button image, so as to shift the appearance area of the operation buttons until all the DVD menus become visible.

However, even if the DVD menus are not hidden by the operation button image, the DVD image could be hidden beneath the operation button image when the DVD menu image is switched to the DVD image. If part or all of the DVD image is concealed, the user will be frustrated particularly when searching images and playing back the image in a special manner.

### SUMMARY OF THE INVENTION

One object of the present invention is to provide a touchscreen display device in which a displayed image is not hidden by the display of operation buttons.

According to one aspect of the present invention, there is provided a touchscreen display device including a screen unit and an image combining unit. The image combining unit includes image processing means and image combining means. The image processing means receives a source image from an image supply portion and reduces a size of the source image. The image combining means combines the size-reduced source image with an operation input receiving image (touchscreen image) such that the size-reduced source image and the operation input receiving image are displayed on the screen unit in an appropriate manner.

If the image supply portion is a DVD, the DVD menu and content are not obstructed by display of the operation input receiving image, and touchscreen operability is improved.

### BRIEF DESCRIPTION OF THE DRAWINGS

Fig. 1 shows the contents displayed on a screen of a conventional touchscreen display device when an operation button screen is superimposed on a menu screen in an inappropriate manner;
Fig. 2 illustrates a block diagram of a touchscreen display device according to one embodiment of the present invention;
Fig. 3 is a flowchart showing the processing performed by the touchscreen display device shown in Fig. 2;
Fig. 4 shows the contents displayed on the screen portion when a DVD menu screen is displayed on the touchscreen display device shown in Fig. 2;
Fig. 5 shows the contents displayed on the screen portion in the touchscreen display device shown in Fig. 2 when the menu screen is compressed toward the upper side of the screen portion and an operation button image screen is displayed superimposed in a lower edge area of the screen portion;
Fig. 6 shows the contents displayed on the screen portion when the menu screen is compressed toward the lower side of the screen portion and the operation button image screen is superimposed in the upper edge area of the screen portion;
Fig. 7 shows the contents displayed on the screen portion when the menu screen is compressed toward the left side of the screen and the operation button image screen is superimposed in the right edge area of the screen portion;
Fig. 8 shows the contents displayed on the screen portion when the menu screen is compressed toward the right side of the screen and the operation button image screen is superimposed in the left edge area of the screen portion;
Fig. 9 shows the contents displayed on the screen portion when the menu screen is compressed toward the upper side as well as the left side of the screen portion, and the operation button image screen is superimposed in the bottom edge area and the right edge area of the screen portion;
Fig. 10A shows the screen portion when a source image is displayed in a wide mode with an aspect ratio 16:9; and,
Fig. 10B shows the screen portion when a display mode is changed from the wide mode (Fig. 10A) to a normal mode, the displayed content is shifted to the left, and the operation button image screen is superimposed in the right edge area of the screen portion.

### DETAILED DESCRIPTION OF THE INVENTION

Referring to the block diagram of Fig. 2, the configuration of a touchscreen display device 70 according to one embodiment of the present invention will be described.

The touchscreen display device 70 may be used for television broadcast receivers, car audio/video equipment, car navigation equipment, DVD players, and other electronic equipment. In other words, if electronic equipment is provided with a touchscreen and the user operates the equipment from the touchscreen, then a touchscreen display device of the present invention can be used. Therefore, electronic equipment having the touchscreen display device is not illustrated in Fig. 2 and description of such electronic equipment is omitted.

In Fig. 2, an image signal supply unit 10 stores various image sources (or receives various image sources), converts the image sources into image signals, and supplies the image signals to the image processor 20. For example, the image signal supply unit 10 includes DVDs and other storage media as well as players for the DVD and other storage media. The image signal supply 10 can also include a receiver which receives image signals supplied by radio waves or from wireless media, and converters which perform image conversion of received image signals.

The image processor 20 performs image processing on image signals supplied from the image signal supply portion 10, according to image processing control signals from the controller 40, and generates an output image (main image) screen for display. The image processor 20 includes, for example, an image memory which temporarily stores image signals supplied from the image signal supply unit 10, a control circuit for this memory, and one or more image signal processing circuits or other circuits to execute certain image processing (none are shown).

It should be noted that the image processor 20 may directly transmit image signals from the image signal supply unit 10 to the image signal processing circuit, so that the image signal processing circuit samples the image signals and performs the image processing. In this case, the image memory for temporary storage of image signals and the control circuit for this memory are unnecessary.

The image combination unit 30 performs image superimposing. Specifically, the image combination unit 30 uses an overlay technique or an OSD technique to display the touchscreen of the various operation buttons superimposed on the output image screen generated by the image processor 20, based on an operation input receiving image signal and/or the processing control signal from the controller 40. The operation image screen of the operation buttons is prepared from the operation input receiving image signal.

The controller 40 executes supervisory control of the entire touchscreen display device 70. The controller 40 includes RAM, ROM, and various other memory circuits, a control screen drawing circuit to generate an operation image screen (touchscreen) containing the operation buttons, various microprocessors for control, and peripheral circuitry (none are shown).

The image processor 20, image combination unit 30, and controller 40 may each be configured as independent circuits. Alternatively, the image processor 20 and image combination unit 30 may be integrated in a single IC chip. Alternatively, the image processor 20, image combination unit 30, and controller 40 may be integrated in a single IC chip.

The screen portion 50 includes a display panel such as an LCD and organic EL display panel. The screen portion 50 also includes a driving control circuit (not shown) for the display panel. The touchscreen input portion 60 is the command input portion of the touchscreen, and includes, for example, a touch sensor surface provided on the display panel, and a control detection circuit for the touch sensor surface (none are shown).

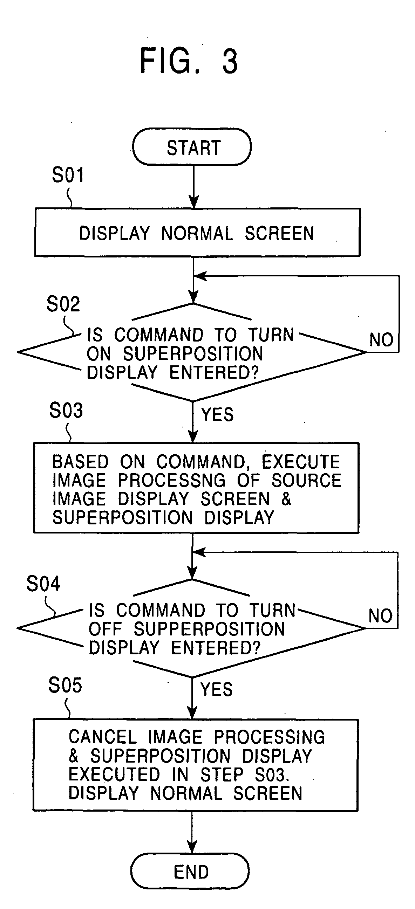

Next, operation of the touchscreen display device 70 shown in Fig. 2 will be described, based on the flowchart of Fig. 3.

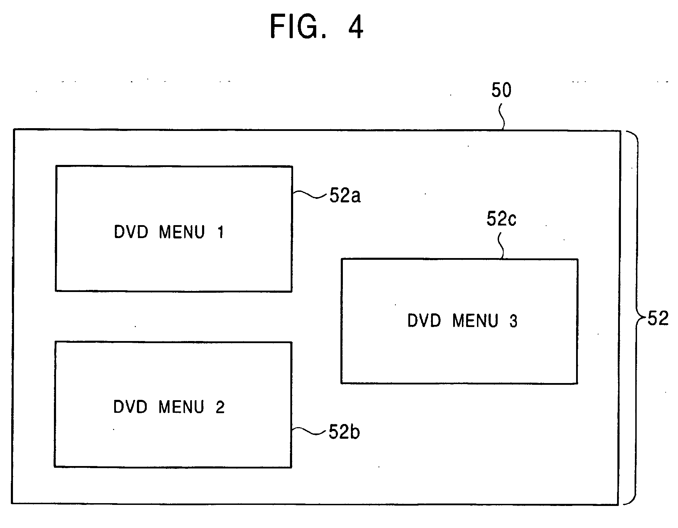

When operation of the touchscreen display device 70 is begun and the user simply views the screen portion 50 without performing an operation on the touchscreen, the image signal supplied from the image signal supply portion 10 is displayed on the screen portion 50, without being subjected to special image processing to display an operation button image screen or the image superimposing processing by the image processor 20 and image combination unit 30 (step S01). In this state, three DVD menus 1 to 3, for example, can be displayed on the screen portion 50, as shown in Fig. 4. Although not illustrated in this drawing, several items are listed in each DVD menu.

The controller 40 constantly monitors the command input from the touchscreen input portion 60 (step S02), while executing the normal image display processing of step S01. When the controller 40 detects that a superimposing display command is input from the touchscreen input portion 60, processing proceeds immediately to step S03. The superimposing display command from the touchscreen input portion 60 may be generated when the user touches a certain area on the screen portion 50, or when a user's finger or other object is brought into proximity with a prescribed position on the screen portion 50 (in this case, contact is not necessary). Alternatively, the superimposing display command may be generated by an operation from a remote-controller (not shown) of the touchscreen display device 70, or may be generated based on a voice of the user if a voice recognition device is associated.

In step S03, when the controller 40 recognizes, from the command input, the operation button image screen to be displayed in superposition and the method of image processing, the controller 40 outputs an image processing control signal to the image processor 20, and supplies an operation input reception image signal to the image combination unit 30. Based on the image processing control signal and operation input reception image signal, image processing of the display screen resulting from the source image signal and superposition display processing of the operation button image screen are performed by the image processor 20 and image combination unit 30. As a result, a superposed display screen is generated from the processed main image screen and operation button image screen (touchscreen), and this is shown on the screen portion 50.

If the image combination unit 30 itself generates the operation input reception image signal, the controller 40 does not supply the operation input reception image signal to the image combination unit 30. Instead, the controller 40 supplies to the image combination unit 30 a processing control signal to begin or end the superimposition display processing.

The image combination unit 30 performs superposition display of the operation button image screen on the main image screen, which is image-processed by the image processor 20. At this time, at least, processing to prevent degradation of display of the main image screen is performed. For example, when the DVD menu screen of Fig. 4 is image-processed in the image processor 20, the image combination unit 30 at least performs superposition display processing of the operation button image screen such that display of the DVD menus 1 through 3 in the screen after image processing is not blocked by the operation button image screen.

Various processing methods are available for the image processing and superposition display processing in step S03.

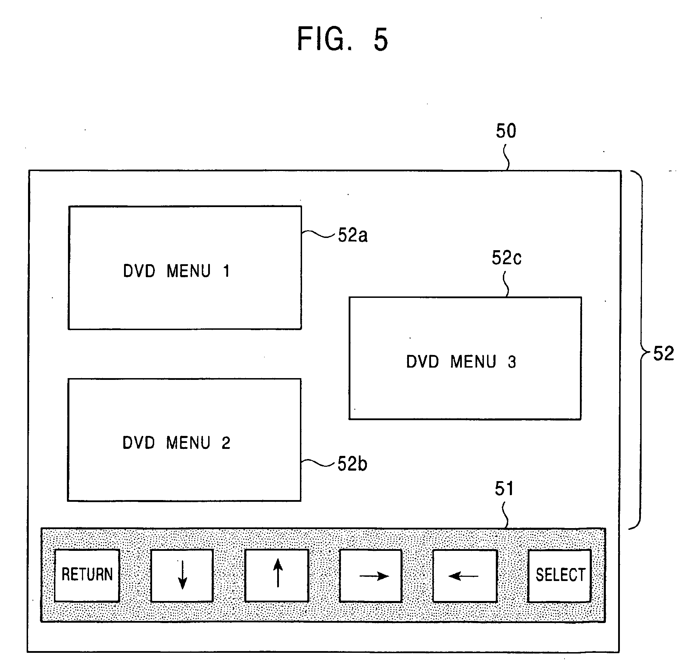

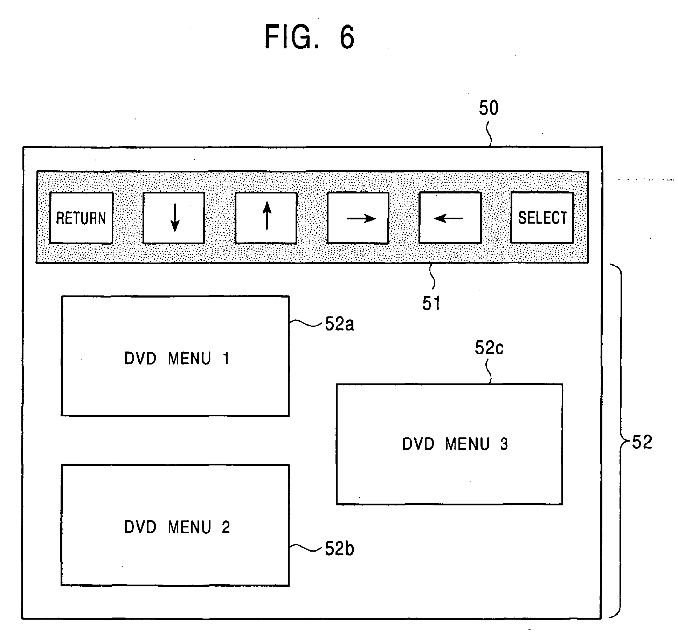

For example, when the operation button image screen is displayed in superposition on the screen portion 50 together with the display screen of the main image derived from a source image signal (hereafter referred to simply as the source image screen), the source image screen may be compressed upward in the vertical direction of the screen portion 50, and the operation button image screen may be displayed in the lower-edge vacant space of the screen portion 50 resulting from the compression processing. Alternatively, the source image screen may be compressed downward in the vertical direction of the screen portion 50, and the operation button image screen displayed in the upper-edge space of the screen portion 50 resulting from the compression processing. If the source image screen is the DVD menu screen, and is compressed upward, then the operation button image screen is displayed in superposition below the DVD menus as shown in Fig. 5. If the source image screen (DVD menus) is compressed downward, the operation button image screen is displayed in superposition over the DVD menus as shown in Fig. 6. In the drawings, the operation button image screen (touchscreen) is denoted by the reference numeral 51, the entire DVD menu screen (source image display screen) is denoted by the reference numerals 52, and the individual DVD menus are denoted by the reference numerals 52a, 52b and 52c.

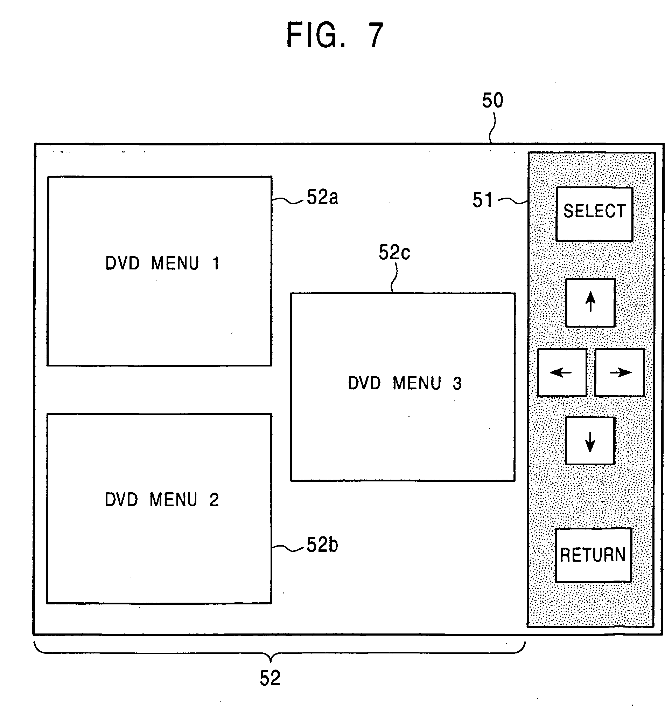

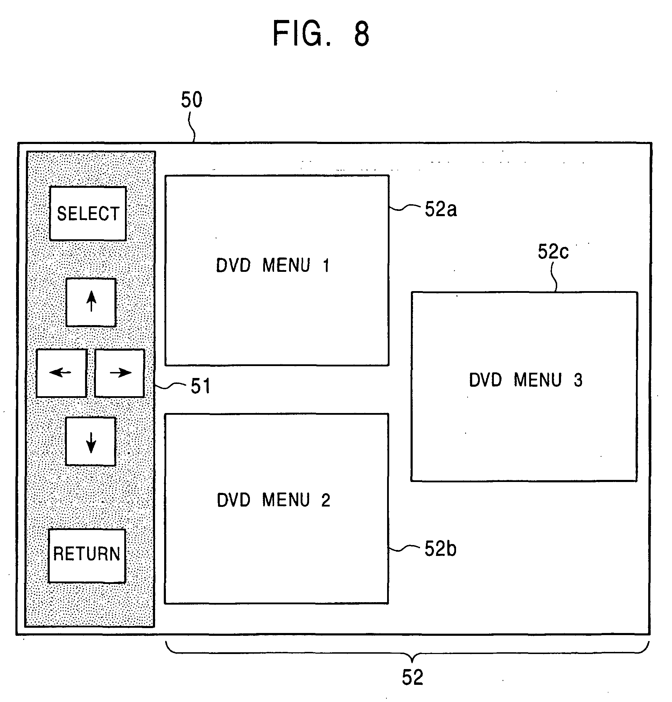

It is also possible to compress the source image screen 52 in the horizontal direction toward the left side of the screen portion 50, and the operation button image screen 51 displayed in the right-edge space of the screen portion 50 occurring due to the compression processing as shown in Fig. 7. Or, the source image screen 52 may be compressed horizontally toward the right side of the screen portion 50, and the operation button image screen 51 displayed in the left-edge space of the screen portion 50 occurring due to the compression processing, as shown in Fig. 8.

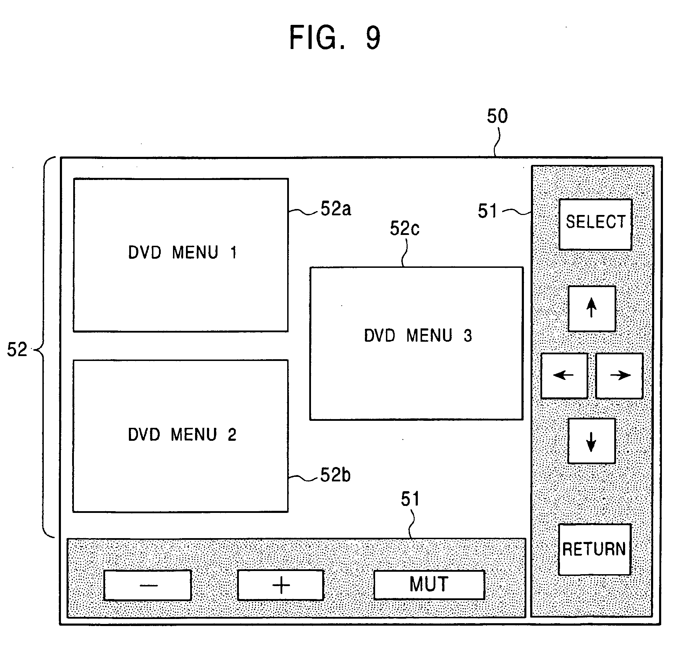

When numerous operation buttons are displayed in the operation button image screen 51, simultaneous compression processing of the source image screen 52 in the vertical and the horizontal directions may be performed as shown in Fig.9.

In Fig. 9, the source image display screen 52 is compressed upward and leftward. Such compression may be termed composite compression processing. By appropriately selecting the compression ratios in the vertical direction and in the horizontal direction, the source image screen 52 can be compressed without affecting the aspect ratio of the display screen, and so the user (viewer) does not feel strange when the user sees the compressed image.

The various parameters such as the screen compression direction and the compression ratios in each direction during compression processing of the source image screen 52 may be set and registered in advance in a memory circuit incorporated into the controller 40. Alternatively, the touchscreen input portion 60 or a remote controller (not shown) of the touchscreen display device 70 may be used to input arbitrary parameters as desired by the user.

The parameters are set in relation to the size of the operation button image screen 51 to be displayed; values are set such that, at least, superposing of the display of the operation button image screen 51 is possible without degrading (blocking) the display of the image-processed, source image screen 52.

In this way, the image combination unit 30 combines the source image screen 52, which is the image screen output from the image processor 20, with the operation button image screen 51 deriving from the operation input reception image signal, so as to generate a superposed display screen of the main image and the operation button image.

In the above description, the operation button image screen is superposed on the DVD menu screen; however, the image processing in step S03 is not limited to this example. For example, if a content (e.g., motion picture) contained in a DVD is displayed, an image screen for fast-forward, pause, and other operations may be superposed on the motion picture. Alternatively, when the DVD player is turned on, the entire DVD menu may be displayed in superposition on a prescribed "start-up" screen.

On ending the image processing of step S03, the controller 40 proceeds to the next step S04 to monitor whether a command of finishing the superposing of the operation button image screen is entered, or a command of turning off the superposed display. The monitoring routine may be started by the time-out of a timer (not shown) incorporated in the controller 40.

When the superposed display off command is confirmed at step S04, the controller 40 turns off the superposed display of the operation button image screen on the screen portion 50, and outputs an image processing control signal, operation input reception image signal, and/or processing control signal to the image processor 20 and image combination unit 30 so as to end the compression processing applied to the source image screen 52.

Based on the image processing control signal, operation input reception image signal and other necessary signals, the image processor 20 and image combination unit 30 end the previously performed processing, and display the image signal supplied from the image signal supply portion 10 on the screen portion 50 without modification (step S05).

In the above description, as the image processing method in step S03 a method in which the source image screen is subjected to compression processing was discussed; however, the present invention is not limited to this embodiment. For example, when performing superposed display processing of the operation button image screen, the compression processing of the source image screen may not be performed; instead, the display mode of the source image screen may be changed to another display mode, and the superposing of the operation button image screen may be performed.

In general, various aspect ratios exist for the screen portion 50 of the touchscreen display device 70, such as 16:9 or 4:3. When for example the aspect ratio of the screen portion 50 is 16:9, at least two display modes are provided. One display mode is a wide-angle display mode (hereafter called a "wide mode") in which the source image is displayed on the entire screen portion 50. The other display mode is a normal display mode (hereafter called a "normal mode") in which the source image is displayed with the aspect ratio 4:3 in the center of the screen portion 50. The wide mode refers to a mode in which the source image in the normal mode is displayed as expanded in both left and right directions to impart an additional width to the screen. In other words, the wide mode is similar to CinemaScope. Consequently if the wide mode is changed to the normal mode, space can be obtained in the left and right portions of the screen portion 50.

When the image is displayed on the screen portion 50 in the wide mode, the following method may be used as the image processing method in the step S03.

When a superposition display command is entered from the touchscreen input portion 60, first the image processor 20 changes the display mode from the wide mode to the normal mode based on an image processing control signal from the controller 40. After the change of the display mode, the normal-mode image is moved to the right side (or the left side) of the screen portion 50, to enlarge the space on the left side (or the right side).

Then, the image combination unit 30 displays in superposition the operation button image screen in the enlarged space, based on an operation input reception image signal from the controller 40.

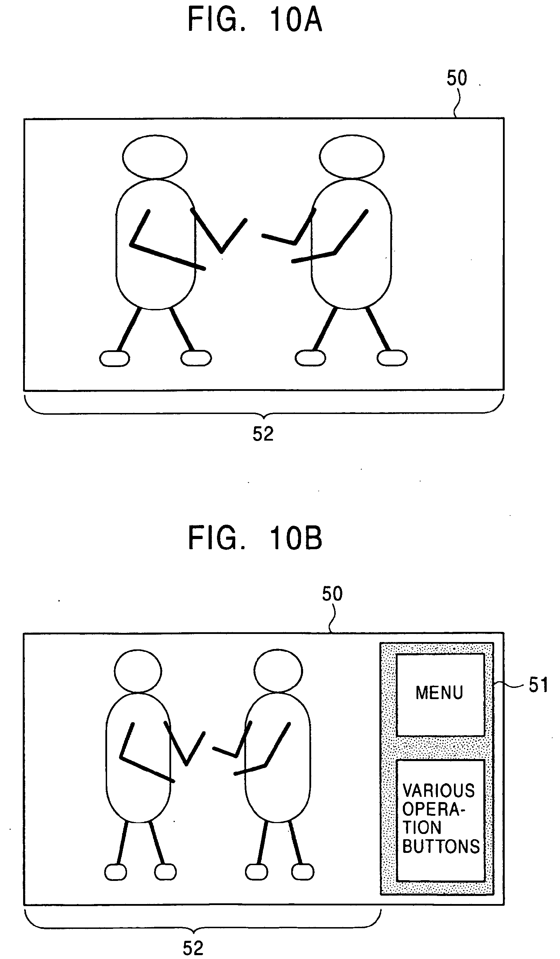

An example of image processing through such a display mode change is shown in Fig. 10A and Fig. 10B. Fig. 10A shows the state in which an image 52 is displayed in the wide mode on a screen portion 50 with an aspect ratio of 16:9. Fig. 10B shows the screen portion 50 after the display mode is changed from the wide mode to the normal mode, and the operation button image 51 is superposed.

This display mode change is not limited to the screen portion 50 with an aspect ratio of 16:9, but can also be applied to the screen portion 50 with an aspect ratio of 4:3. If the screen portion 50 has the aspect ratio of 4:3, the display mode may be changed from normal mode to a letterbox mode, so that space is formed at the top and bottom of the screen portion 50. Then the letterbox image may be moved to the top (or the bottom) of the screen portion 50, to enlarge the space on the bottom (or the top) of the screen portion. Subsequently, the operation button image screen may be displayed in superposition in the enlarged space. An appropriately combined display screen can be accordingly generated.

In this way, the display mode change processing can be applied to the screen portions with various aspect ratios.

The present invention is not limited to the above described and illustrated embodiment. Various changes and modifications can be made by those having an ordinary skill in the art without departing from the spirit and scope of the present invention. For example, the following modification can be made.

In step S02 of the flowchart shown in Fig. 3, the controller 40 awaits a command from the touchscreen input portion 60, and issues instructions for the superposition display processing of the operation button image screen. This can be modified when DVDs or similar image sources are considered.

An ordinary DVD has the menu information recorded on the DVD, and as a consequent of the image signal format the menu information 52a-52c is automatically displayed on the screen portion 50. If an operation button image screen 51 to select the menu (or one of the items listed in the menu) is simultaneously and automatically displayed upon the displaying of the menu information 52a-52c, the convenience for the user is enhanced.

That is, in the flowchart of Fig. 3, when the menu information 52a-52c is displayed on the screen portion 50, the operation button image screen 51 may be automatically superposed without awaiting a superposition display command from the touchscreen or remote controller or similar.

In this case, the method of superposing the operation button image screen 51 on the menu screen 52 may be set and registered in a memory in advance within the controller 40; or, at the time of reset of the touchscreen display device 70, the user can make settings from the touchscreen input portion 60 or from a remote-control device.

## Claims

1. A touchscreen display device, comprising:
a screen unit having a horizontal direction and a vertical direction; and
an image combining unit which includes image processing means and image combining means, the image processing means receiving a source image signal from an image signal supply portion and reducing a size of a first image resulting from the source image signal, the image combining means combining the size-reduced first image with a second image resulting from an operation input reception image signal such that the size-reduced first image and the second image are displayed on the screen unit.

2. The touchscreen display device according to Claim 1, wherein the image combining means combines the size-reduced first image with the second image such that the size-reduced first image is not blocked by the second image.

3. The touchscreen display device according to Claim 1 or 2, wherein the image processing means performs screen compression processing to the first image to reduce the size of the first image in at least one of the horizontal and vertical directions.

4. The touchscreen display device according to Claim 3, wherein the image processing means can determine a compression ratio in the screen compression processing based on an external command.

5. The touchscreen display device according to Claim 3 or 4, wherein the image processing means performs the screen compression processing in the horizontal and vertical directions, while maintaining an aspect ratio of the first image.

6. The touchscreen display device according to any one of Claims 1 to 5, wherein the image processing means reduces the size of the first image by changing a display mode of the first image.

7. The touchscreen display device according to any one of Claims 1 to 6, wherein the image signal supply portion produces the source image signal from a recording medium, and the first image includes a menu image indicating a content of the recording medium.

8. The touchscreen display device according to any one of Claims 2 to 7, wherein the second image is superposed on the first image.

9. The touchscreen display device according to Claim 6, 7 or 8, wherein the display mode is changed from a wide mode to a normal mode.

10. The touchscreen display device according to Claim 6, 7 or 8, wherein the display mode is changed from a normal mode to a letterbox mode.

11. A display apparatus having a touchscreen portion, the display apparatus displaying a first image derived from an image source and a touchscreen image, the display apparatus comprising:
a screen device having a horizontal direction and a vertical direction;
an image processor for receiving the first image from the image source, and reducing a size of the first image; and
an image combining unit for combining the size-reduced first image with the touchscreen image such that the size-reduced first image and the touchscreen image are displayed on the screen device.

12. The display apparatus according to Claim 11, wherein the image combining unit combines the size-reduced first image with the touchscreen image such that the size-reduced first image is not blocked by the touchscreen image.

13. The display apparatus according to Claim 11 or 12, wherein the image processor performs compression processing to the first image to reduce the size of the first image in at least one of the horizontal and vertical directions.

14. The display apparatus according to Claim 13, wherein the image processor determines a compression ratio in the compression processing based on an external command.

15. The display apparatus according to Claim 13 or 14, wherein the image processor performs the compression processing in the horizontal and vertical directions, while maintaining an aspect ratio of the first image.

16. The display apparatus according to any one of Claims 11 to 15, wherein the image processor reduces the size of the first image by changing a display mode of the first image.

17. The display apparatus according to any one of Claims 11 to 16, wherein the image source is a recording medium, and the first image includes a menu image indicating a content of the recording medium.

18. The display apparatus according to any one of Claims 12 to 17, wherein the touchscreen image is superposed on the first image.

19. A method of superposing a touchscreen image on a main image derived from an image source, comprising:
receiving the main image from the image source;
receiving the touchscreen image;
reducing a size of the main image such that the touchscreen image does not block the size-reduced main image when the touchscreen image is superposed on the main image; and
superposing the touchscreen image on the size-reduced main image.

20. The method according to Claim 19, wherein the size of the main image is reduced by compression.
